# EUROPEAN PATENT SPECIFICATION

(11) **EP 2 613 074 B1**
(45) Date of publication and mention of the grant of the patent: **11.07.2018**
(21) Application number: 10856332.1
(22) Date of filing: 24.12.2010
(51) Int. Cl.: F16M 11/04, G03B 17/56

(54) **TRIPOD HEAD LOCKING DEVICE, ADJUSTING DEVICE AND HOLDER PANEL DEVICE**
BLOCKIERVORRICHTUNG FÜR EINEN STATIVKOPF, EINSTELLVORRICHTUNG UND HALTERPLATTE
DISPOSITIF DE VERROUILLAGE À TÊTE TRIPODE, DISPOSITIF DE RÉGLAGE ET DISPOSITIF DE PANNEAU SUPPORT

(30) Priority: 01.09.2010 CN 201010268777
(43) Date of publication of application: 10.07.2013
(73) Proprietor: Lap Shun Manufacture Co. Ltd., Zhongshan, Guangdong 528467 (CN)
(72) Inventor: LI, Shuqiang, Zhongshan Guangdong 528467 (CN)
(74) Representative: Zenz Patentanwälte Partnerschaft mbB
(86) International application number: PCT/CN2010/080223
(87) International publication number: WO 2012/024880

(56) References cited:
- CN-A- 101 922 599
- CN-A- 101 922 600
- CN-U- 201 795 241
- CN-Y- 2 888 486
- CN-Y- 201 156 152
- CN-Y- 201 340 508
- CN-Y- 201 368 301
- JP-A- 10 288 811
- JP-A- 2005 090 730
- US-A- 2 180 214
- US-A- 2 911 700

## Description

### FIELD OF THE INVENTION

The present invention relates to photographic equipments, in particular to a panel device of a tripod head.

### BACKGROUND OF THE INVENTION

Both the amateur photographers and professional photographers are eager to quickly, accurately and stably fix a camera or video camera onto a tripod, so as to shoot those passing pictures or images. For example, document US2911700 discloses a mounting for a motor having spaced laterally extending attaching flanges.

To achieve the above object, people have to use expensive tripods. These tripods have tripod heads with very complex structures. Meanwhile, installation of the camera or video camera onto the tripod head and the following adjustment are very complicated. After finishing the adjustment, the photographer may probably have missed a good opportunity to capture a great image.

Therefore, to overcome the above deficiencies, there is an urgent need for a reliable tripod head panel device, which is simple in structure and is quick to install.

### SUMMARY OF THE INVENTION

The object of the present invention is to provide a panel device of a tripod head.

To achieve the above object, the following technical solutions are adopted.

According to the present invention as defined in the claims, a tripod head panel device includes: a tripod head panel and a snap-fit plate removably mounted on the tripod head panel. The tripod head panel includes a fixed plate, a moveable plate mounted underneath the fixed plate and a driving plate mounted underneath the moveable plate. The fixed plate includes a bearing base plate and a first retaining wall protruding upward from the bearing base plate. The moveable plate includes a supporting base plate and a second retaining wall protruding upward from the supporting base plate. The moveable plate is provided with a driving hole in the center of the movable plate. The driving plate includes a base mounted underneath the moveable plate and a handle extending from an end of the base, while an offset cam formed on the base is provided inside the driving hole. The snap fit plate is mounted on the bearing base plate, and is provided between the first and the second retaining walls. An axle hole is provided at the center of the bearing base plate. A positioning column extending downward from the centre of the bottom of the bearing base plate is formed, with the axle hole getting through the positioning column. A perforation corresponding to the axle hole of the fixed plate is provided longitudinally on the eccentric cam. The positioning column inserts into the perforation, and finally protrudes from the bottom of the driving plate by a screw thread. By a nut fixed on the screw thread, the fixed plate, the movable plate and the driving plate are fixed with each other.

Compared with the prior art, the tripod head locking device of the present invention is simple in structure, quick to install, and is reliable. The tripod head adjusting device of the present invention is simple in structure, quick to install, and is reliable. The tripod head panel device of the present invention is simple in structure, quick to install, and is reliable. Therefore, it is easy to fix a camera or other equipments on the tripod head panel.

### BRIEF DESCRIPTION OF THE DRAWINGS

Fig. 1 is a perspective view of the tripod head panel device of one embodiment of the present invention.
Fig. 2 is a perspective view of the tripod head panel device of Fig. 1 viewed from another direction.
Fig. 3 is an exploded view of the tripod head panel of the tripod head panel device of the present invention.
Fig. 4 is a perspective view of the tripod head panel of Fig. 3. viewed from another direction.
Fig. 5 is an assembly view of the tripod head panel of the tripod head panel device of one embodiment of the present invention.
Fig. 6 is the moving principle of the snap-fit plate of the tripod head panel device of one embodiment of the present invention.
Fig. 7 is a perspective view of the snap-fit plate of the tripod head panel device of one embodiment of the present invention.
Fig.8 is an exploded view of the snap fit plate of Fig. 7.
Fig. 9 is an exploded view of the snap fit plate of Fig. 7 viewed from another direction
Fig. 10 is the moving process of the snap-fit plate of Figs. 7-9.

### DETAILED DESCRIPTION OF THE PREFERRED EMBODIMENTS

The invention may be best understood by reference to the following description taken in conjunction with the accompanying drawings.

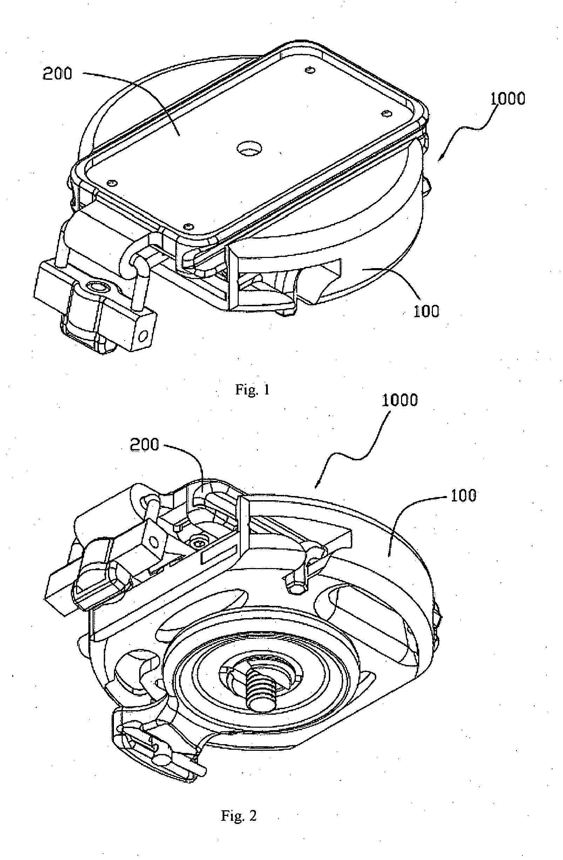

Referring to Fig. 1-2, the present invention provides a tripod head panel device 1000, which includes a tripod head panel 100 and a snap-fit plate 200 removably mounted to the tripod head panel 100.

The structure of the tripod head panel 100 and the snap-fit plate 200 will now be described.

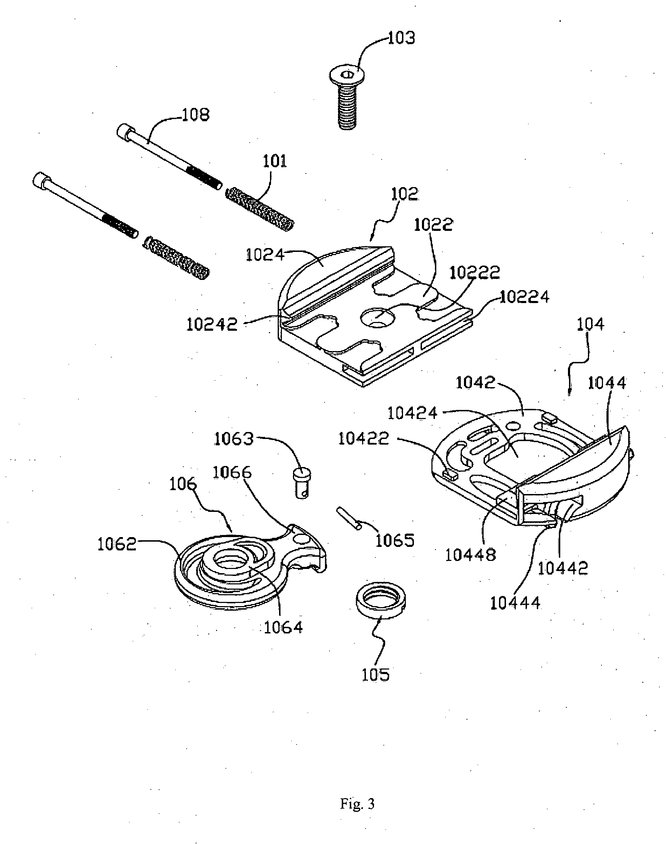

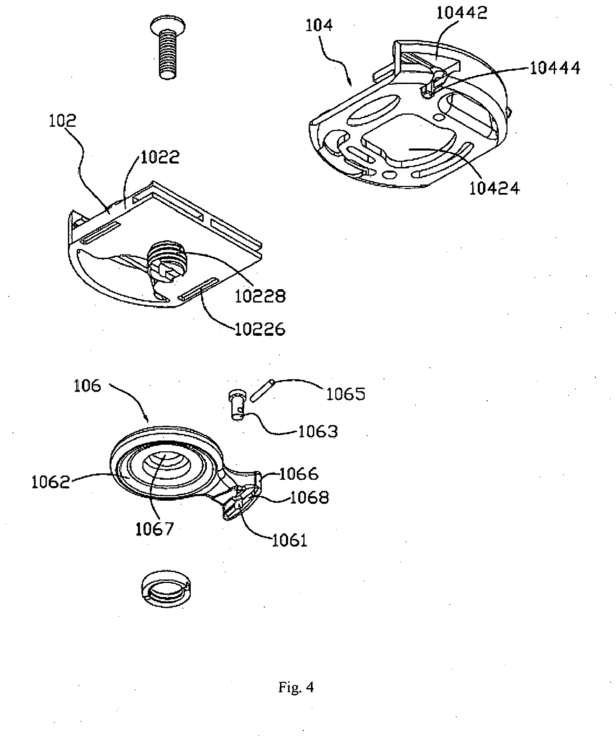

Referring to Figs. 3-6, the tripod head panel 100 includes a fixed plate 102, a movable plate 104 mounted at the bottom of the fixed plate 102 which can elastically slide on the tripod head panel 100, and a driving plate 106 rotatablely mounted at the bottom of the movable plate 104, so as to facilitate the movable plate 104 to slide on the fixed plate 102.

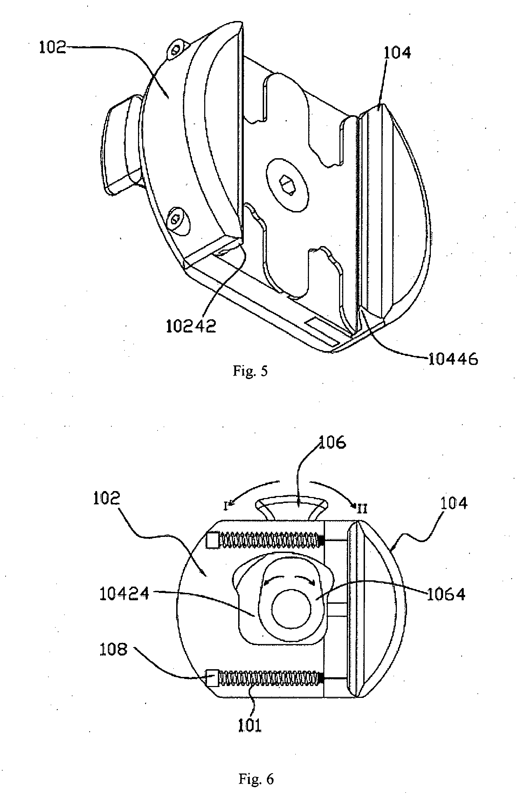

The fixed plate 102 includes a bearing base plate 1022 supporting the snap-fit plate 200, and a first retaining wall 1024 protruding upward from an edge of the bearing base plate 1022. An axle hole 10222 is provided at the centre of the bearing base plate 1022. A plurality of guiding grooves 10224, such as two, are provided on the side of the bearing base plate 1022 which is opposite to the first retaining wall 1024, so as to guide the movable plate 104 to slide with respect to the fixed plate 102. A positioning column 10228 is formed by extending downward from the centre at the bottom of the bearing base plate 1022, and the axle hole 10222 pass through the positioning column 10228. In addition, a pair of slide grooves 10226 are provided on the bottom of the bearing base plate 1022 to further guiding the movable plate 104 to slide with respect to the fixed plate 102. Furthermore, a first spine 10242 is formed on the first retaining wall 1024 (Referring to Fig. 5)

The movable plate 104 includes a support base plate 1042 supporting the snap-fit plate 200, and a second retaining wall 1044 protruding upward from an edge of the support base plate 1042. A driving hole 10424 is provided at the centre of the movable plate 104, configured to allow the proper components of the driving plate 106 to rotate eccentrically inside. In addition, two sides of the end of the movable plate 104 opposing to the second retaining wall 1044 extend upwards respectively, forming slide blocks 10422 that fit the slide groove 10226 of the fixed plate 102. A second spine 10446 is further formed in the second retaining wall 1044 (Referring to Fig. 5). A guide block 10448 fitting the guiding grooves 10224 of the fixed plate 102 is formed on the second retaining wall 1044 by extending upward horizontally. In addition, a notch 10442 is provided downwardly at the bottom of the second retaining wall 1044. The notch 10442 protrudes downward to form a lock column 10444.

The detailed structure of the driving plate 106 will now be described. The driving plate 106 is rotatably mounted at the bottom of the movable plate 104. The movable plate 104 can slide with respect to the fixed plate 102 by turning the driving plate 106. The driving plate 106 includes a base 1062 and a handle 1066 extending from one end of the base 1062. An eccentric cam 1064 is formed on the base 1062, which can eccentrically rotate inside the driving hole 1062 of the movable plate 104(referring to Fig. 3 and 6). A perforation 1067 corresponding to the axle hole 10222 of the fixed plate 102 is provided longitudinally on the eccentric cam 1064. A thorough hole 1061 is provided longitudinally on the handle 1066, which can be passed through by a lock pin 1063. The lock pin 1063 can be rotatably mounted on the handle 1066 by a dowel pin 1065 that longitudinally passes through the lock pin 1063.

The fixed plate 102 is positioned on the support base plate 1042 of the movable plate 104. The slide blocks 10422 of the movable plate 104 are respectively arranged in the corresponding slide grooves 10226 of the fixed plate 102. The guide block 10448 of the movable plate 104 is inserted into corresponding guiding groove 10244 of the fixed plate 102. The first retaining wall 1024 of the fixed plate 102 and the second retaining wall 1044 of the movable plate 104 are parallel to each other, forming a gap of certain width between the two retaining walls 1024 and 1044, so as to mount the snap-fit plate 200 there between. The driving plate 106 is arranged at the bottom of the movable plate 104. The eccentric cam 1064 of the driving plate 106 is eccentrically arranged in the driving hole 10424 of the movable plate 104. In addition, the positioning column 10228 of the fixed plate 102 inserts into the perforation 1067 of the eccentric cam 1064 and finally inserts into the perforation 1067 of the driving plate 106. A pair of screw rods 108 respectively pass through the first retaining wall 1024 of the fixed plate 102 and the corresponding guiding groove 10224, then abut on corresponding guide block 10448 of the movable plate 104. An extension spring 101 formed on each screw rod 108. When the spring 101 is stretched, there is a tendency between the fixed plate 102 and the movable plate 104 to approach each other.

The fixed plate 102, the movable plate 104 and the driving plate 106 are fixed in this manner: first, the screw 103 extends and passes through the axle hole 10222 of the fixed plate 102, and protrudes outward from the bottom of the driving plate 106; then the nut 105 is fixed on the screw rod 108, such that the fixed plate 102, the movable plate 104 and the driving plate 106 are fixed with each other.

The operation principle of the tripod head 100 will now be described. Referring to Fig. 6, when the eccentric cam 1064 is not in touch with the driving hole 10424, the distance between the fixed plate 102 and the movable plate 104 is the smallest. When turning the driving plate 106 along direction II, the eccentric cam 1064 drives the movable plate 104 toward the right, so as to allow the movable plate 104 and the fixed plate 102 to move further away from each other, thereby increasing the distance between the first retaining wall 10242 and the second retaining wall 10446. At the moment, the snap-fit plate 200 can be easily positioned between the two retaining - walls. When turning the driving plate 106 along direction I, the eccentric cam 1064 drives the movable plate 104 toward the left, so as to allow the movable plate 104 to become closer to the fixed plate 102. At the moment, the snap-fit plate 200 can be tightly fixed between the two retaining walls, thereby preventing the snap-fit plate 200 from becoming loose and falling down.

To prevent the driving plate 106 from turning back to its previous position after rotating a certain angle, the driving plate 106 can be locked. Specifically, by pulling the dowel pin 1065 onto the slope 1068, the lock pin 1063 will protrude downwards, so as to allow the lock pin 1063 to be inserted into the notch 10442 of the movable plate 104, thereby preventing the driving plate 106 from being rotated. By reverse operation, the locking can be released.

A thorough hole 1061 is provided longitudinally in the handle 1066 for passing through a lock pin 1063. The lock pin 1063 can be rotatably mounted on the handle 1066 by a dowel pin 1065 longitudinally passing through the lock pin 1063. In addition, a slope 1068 is formed at the bottom of the handle 1066.

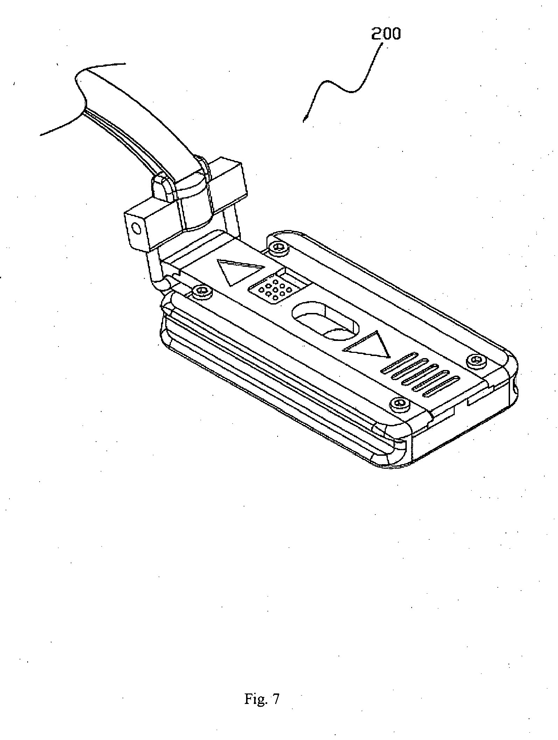

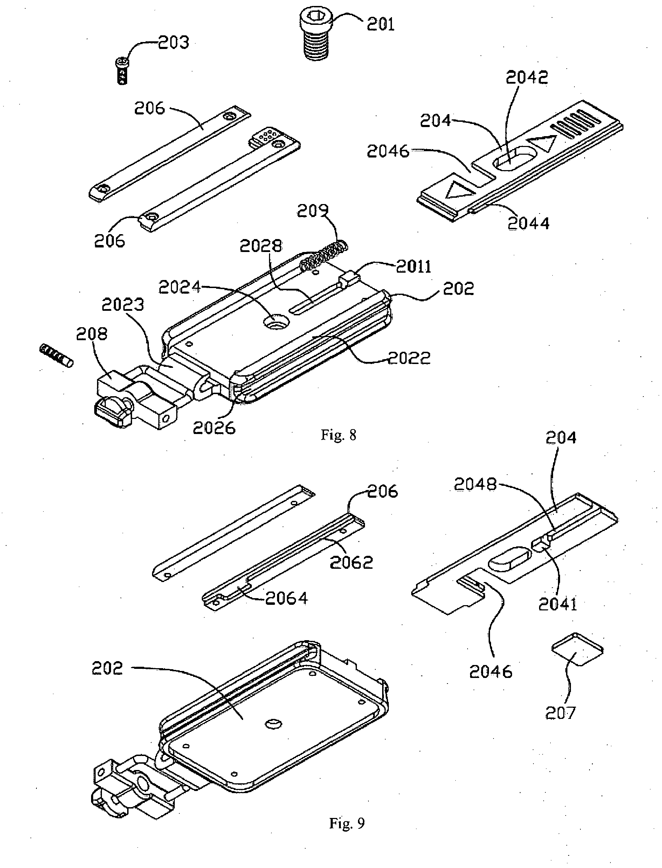

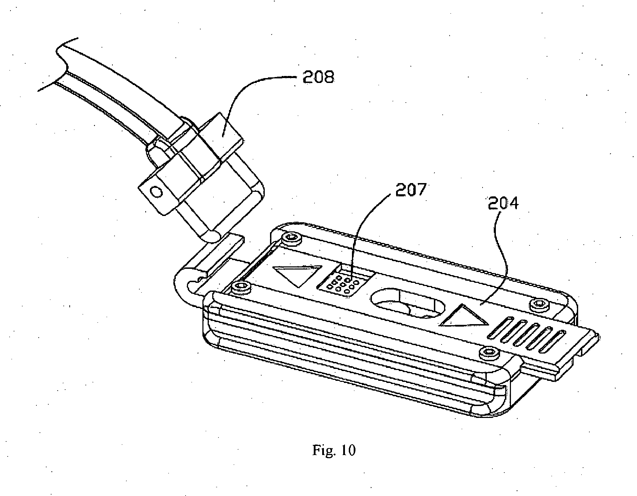

The structure of the snap-fit plate 200 will now be described. Referring to Fig. 7-10, the snap-fit plate 200 includes a slide seat 202, a pair of limiting bars 206 mounted on two sides of the slide seat 202 and a slider 204 capable of sliding on the slide seat 202 provided between the limiting bars 206.

Flanges 2022 are formed by the two longitudinally protruding edges of the slide seat 202. Slideways 2026 longitudinally extending are formed inside the flanges 2022. Each of the slideways 2026 corresponds to the two spines 10242 and 10446 of the head plate 100. The slide seat 202 is provided on the bearing base plate 1022 of the fixed plate 102 of the tripod head plate 100, and the two spines 10242 and 10446 of the tripod head panel 100 are respectively fitted into corresponding slideways 2026, such that the snap-fit plate 200 can slide on the head plate 100.

A fixing hole 2024 is provided at the centre of the slide seat 202, and a first groove 2028 is provided longitudinally at the back end of the slide seat 202. A first limiting block 2021 is formed at the end of the first groove 2028. In addition, the head of the slide seat 202 is bent to form a hook 2023.

The two limiting bars 206 are fixed in the inner side of the flanges 2022 of the slide seat 202 respectively, for example, by the screws 2031. A step 2026 is provided longitudinally at the bottom of each limiting bar 206. In addition, one of the limiting bars 206 is provided with a slot 2064 at the bottom.

A longitudinally extending slide hole 2042 is provided at the centre of the slider 204. A plate-locking slot 2046, corresponding to the slot of one of the limiting bars 206 with a locking plate 207 capable of horizontally sliding set inside, is formed in the head of the slider 204. In addition, a second groove 2048, which corresponds to the first groove 2028 of the slide seat 202, is provided at the bottom of the slider 204. A second limiting block 2041 is formed at the end of the second groove.

In addition, slide rails 2044 corresponding to the steps 2026 of the limiting bars 206 are formed on both sides of the slider 204. The slider 204 is provided on the slide seat 202 between the two limiting bars 206. The two slide rails 2044 of the slider 204 are respectively provided between the two steps 2062 of the limiting bars 206, so as to allow the slider 204 to move longitudinally relative to the slide seat 202. The limit column 201 passing through the slide hole 2042 of the slider 204 is fixed in the fixing hole 2024 of the slide seat 202, so as to limit the longitudinal moving range of the slider 204.

Preferably, in order to get back to its original position after the slider 204 moving a given distance, a pressure spring 209 may be mounted between the first limiting block 2021 and the second limiting block 2041. The pressure spring 209 may be arranged between the space defined both by the first groove 2028 and the second groove 2048.

Preferably, in order to limit the slider 204 in a certain position, the locking plate 207 in the locking-plate slot 2046 can be turned into the slot 2064 of the limiting bar 206.

Furthermore, a retaining ring 208 can be fitted into the hook 2023 of the slide seat 202.

## Claims

1. A tripod head panel device, comprising:
a tripod head panel (100), and
a snap-fit plate (200) removably mounted on the tripod head panel (100);
the tripod head panel (100) comprising a fixed plate (102), a moveable plate (104) mounted underneath the fixed plate (102), and a driving plate (106) mounted underneath the moveable plate (104);
wherein the fixed plate (102) comprises a bearing base plate (1022) and a first retaining wall (1024) protruding upward from the bearing base plate (1022); the moveable plate (104) comprising a support base plate (1042) and a second retaining wall (1044) protruding upward from the support base plate (1042), with a driving hole (10424) provided in the centre of the moveable plate (104); the driving plate (106) comprising a base (1062) mounted underneath the moveable plate (104) and a handle (1066) extending from an end of the base, with an offset cam (1064) inside the driving hole (10424) formed on the base; the snap fit plate (200) mounted on the bearing base plate (1022) between the first and the second retaining walls (1024, 1044);
**characterized in that** an axle hole (10222) is provided at the centre of the bearing base plate (1022); a positioning column (10228) extending downward from the centre of the bottom of the bearing base plate (1022) is formed, with the axle hole (10222) getting through the positioning column (10228); a perforation (1067) corresponding to the axle hole (10222) of the fixed plate (102) is provided longitudinally on the eccentric cam (1064); the positioning column (10228) inserts into the perforation (1067), and finally protrudes from the bottom of the driving plate (106) by a screw thread fixed on the screw thread of the positioning column (10228), the fixed plate (102), the movable plate (104) and the driving plate (106) are fixed with each other.

2. The tripod head panel device of claim 1, wherein one or more guiding grooves (10224) are provided on the side of the bearing base plate (1022) which is opposite to the first retaining wall (1024); a pair of slide grooves (10226) are provided on the bottom of the bearing base plate (1022); two sides of the end of the movable plate (104) opposing to the second retaining wall (1044) extend upwards respectively, forming slide blocks (10422); a guide block (10448) extending upward horizontally fitting the guiding grooves (10224) of the fixed plate (102) is formed on the second retaining wall (1044); the fixed plate (102) is provided on the support base plate (1042) of the movable plate (104); the slide blocks (10422) of the movable plate (104) are respectively arranged in the corresponding slide grooves (10226) of the fixed plate (102); the guide block (10448) of the movable plate (104) is inserted into corresponding guiding groove (10224) of the fixed plate (102); the first retaining wall (1024) of the fixed plate (102) and the second retaining wall (1044) of the movable plate (104) are parallel to each other, forming a gap of certain width between the two retaining walls (1024, 1044), so as to mount the snap-fit plate (200) there between; a pair of screw rods (108) pass through the first retaining wall (1024) and the guiding grooves (10224) respectively, and abut on the corresponding guide block (10448); each of the screw rods (108) are provided with an extension spring (101).

3. The tripod head panel device of claim 2, wherein a thorough hole (1061) is provided longitudinally on the handle (1066), with a lock pin (1063) passing through thereby; the lock pin (1063) is rotatably mounted on the handle (1066) by a dowel pin (1065) longitudinally passing through the lock pin (1063); the bottom of the handle (1066) is a slope (1068).

4. The tripod head panel device of claim 3, wherein the snap-fit plate (200) comprises a slide seat (202), a pair of limiting bars (206) mounted on two sides of the slide seat (202), and a slider (204) capable of sliding on the slide seat (202) provided between the limiting bars (206).

5. The tripod head panel device of claim 4, wherein a first spine (10242) is formed on the first retaining wall (1024); a second spine (10446) is formed on the second retaining wall (1044); flanges (2022) are formed by the two longitudinally protruding edges of the slide seat (202); slideways (2026) longitudinally extending are formed inside the flanges (2022); the slide seat (202) is provided on the bearing base plate (1022) of the fixed plate (102) of the tripod head plate, and the two spines (10242, 10446) of the tripod head panel (100) are respectively fitted into corresponding slideways (2026).

6. The tripod head panel device of claim 5, wherein a fixing hole (2024) is provided at the centre of the slide seat (202), and a first groove (2028) is provided longitudinally at the back end of the slide seat (202); a first limiting block (2021) is formed at the end of the first groove (2028); the head of the slide seat (202) is bent to form a hook; the two limiting bars (206) are fixed in the inner side of the flanges (2022) of the slide seat (202) respectively; a step is provided longitudinally at the bottom of each limiting bar, with one of the limiting bars (206) is provided with a slot (2064) at the bottom; a longitudinally extending slide hole (2042) is provided at the centre of the slider (204); a plate-locking slot (2046), corresponding to the slot of one of the limiting bars (206) with a locking plate (207) capable of horizontally sliding set inside, is formed in the head of the slider (204); a second groove (2048), which corresponds to the first groove (2028) of the slide seat (202), is provided at the bottom of the slider (204); a second limiting block (2041) is formed at the end of the second groove (2048); slide rails (2044) corresponding to the steps (2026) of the limiting bars (206) are formed on both sides of the slider (204); the slider (204) is provided on the slide seat (202) between the two limiting bars; the two slide rails of the slider are respectively provided between the two steps of the limiting bars (206); a limit column (201) passing through the slide hole (2042) of the slider (204) is fixed in the fixing hole (2024) of the slide seat (202).

7. The tripod head panel device of claim 6, wherein a pressure spring (209) is mounted between the first groove (2028) and the second groove (2048).

8. The tripod head panel device of claim 7, wherein a retaining ring (208) is provided inside the hook (2023) of the slide seat (202).

9. The tripod head panel device of claim 8, wherein a notch (10444) is provided downwardly at the bottom of the second retaining wall (1044), the notch (10444) protruding downward to form a lock column.

## Patentansprüche

1. Stativkopfplattenvorrichtung, umfassend:
eine Stativkopfplatte (100) und
eine Schnappsitzplatte (200), die entfernbar auf der Stativkopfplatte (100) montiert ist,
wobei die Stativkopfplatte (100) eine feste Platte (102), eine bewegbare Platte (104), die unter der festen Platte (102) montiert ist, und eine Mitnehmerplatte (106), die unter der bewegbaren Platte (104) montiert ist, umfasst,
wobei die feste Platte (102) eine Lagerbasisplatte (1022) und eine erste Haltewand (1024), die von der Lagerbasisplatte (1022) nach oben vorsteht, umfasst, wobei die bewegbare Platte (104) eine Stützbasisplatte (1042) und eine zweite Haltewand (1044), die von der Stützbasisplatte (1042) nach oben vorsteht, mit einem Mitnehmerloch (10424), das in der Mitte der bewegbaren Platte (104) bereitgestellt ist, umfasst, wobei die Mitnehmerplatte (106) eine Basis (1062), die unter der bewegbaren Platte (104) montiert ist, und einen Griff (1066), der sich von einem Ende der Basis erstreckt, mit einer versetzten Nocke (1064) im Inneren des Mitnehmerlochs (10424), das auf der Basis gebildet ist, umfasst, wobei die Schnappsitzplatte (200) auf der Lagerbasisplatte (1022) zwischen der ersten und der zweiten Haltewand (1024, 1044) montiert ist,
**dadurch gekennzeichnet, dass** ein Achsloch (10222) in der Mitte der Lagerbasisplatte (1022) bereitgestellt ist, wobei eine Einstellsäule (10228), die sich von der Mitte des Bodens der Lagerbasisplatte (1022) nach unten erstreckt, gebildet ist, mit dem Achsloch (10222), das durch die Einstellsäule (10228) verläuft, wobei eine Durchlochung (1067), die dem Achsloch (10222) der festen Platte (102) entspricht, längs auf der exzentrischen Nocke (1064) bereitgestellt ist, wobei die Einstellsäule (10228) in die Durchlochung (1067) einsetzbar ist und schließlich von dem Boden der Mitnehmerplatte (106) um ein Schraubengewinde vorsteht, wobei durch eine Mutter (105), die auf dem Schraubengewinde der Einstellsäule (10228) befestigt ist, die feste Platte (102), die bewegbare Platte (104) und die Mitnehmerplatte (106) aneinander befestigt sind.

2. Stativkopfplattenvorrichtung nach Anspruch 1, wobei eine oder mehrere Führungsnuten (10224) auf der Seite der Lagerbasisplatte (1022) bereitgestellt sind, die der ersten Haltewand (1024) gegenüberliegt, ein Paar Gleitnuten (10226) auf dem Boden der Lagerbasisplatte (1022) bereitgestellt sind, sich zwei Seiten des Endes der bewegbaren Platte (104), die der zweiten Haltewand (1044) gegenüberliegen, jeweils nach oben erstrecken, wobei Gleitblöcke (10422) gebildet werden, ein Führungsblock (10448), der sich nach oben horizontal passend zu den Führungsnuten (10224) der festen Platte (102) erstreckt, auf der zweiten Haltewand (1044) gebildet ist, die feste Platte (102) auf der Stützbasisplatte (1042) der bewegbaren Platte (104) bereitgestellt ist, die Gleitblöcke (10422) der bewegbaren Platte (104) jeweils in den entsprechenden Gleitnuten (10226) der festen Platte (102) angeordnet sind, der Führungsblock (10448) der bewegbaren Platte (104) in eine entsprechende Führungsnut (10224) der festen Platte (102) eingesetzt ist, die erste Haltewand (1024) der festen Platte (102) und die zweite Haltewand (1044) der bewegbaren Platte (104) parallel zueinander sind, wobei eine Lücke einer bestimmten Breite zwischen den zwei Haltewänden (1024, 1044) gebildet ist, um die Schnappsitzplatte (200) dazwischen zu montieren, ein Paar Gewindestangen (108) jeweils durch die erste Haltewand (1024) und die Führungsnuten (10224) verlaufen und an den entsprechenden Führungsblock (10448) anliegen, jede der Gewindestangen (108) mit einer Zugfeder (101) bereitgestellt ist.

3. Stativkopfplattenvorrichtung nach Anspruch 2, wobei ein Durchgangsloch (1061) längs auf dem Griff (1066) bereitgestellt ist, mit einem Verriegelungsstift (1063), der hindurch verläuft, der Verriegelungsstift (1063) drehbar auf dem Griff (1066) durch einen Passstift (1065) montiert ist, der längs durch den Verriegelungsstift (1063) verläuft, der Boden des Griffs (1066) eine Schräge (1068) ist.

4. Stativkopfplattenvorrichtung nach Anspruch 3, wobei die Schnappsitzplatte (200) einen Gleitsitz (202), ein Paar Begrenzungsstangen (206), die auf zwei Seiten des Gleitsitzes (202) montiert sind, und einen Schieber (204), der imstande ist, auf dem Gleitsitz (202), der zwischen den Begrenzungsstangen (206) bereitgestellt ist, zu gleiten, umfasst.

5. Stativkopfplattenvorrichtung nach Anspruch 4, wobei ein erster Rücken (10242) auf der ersten Haltewand (1024) gebildet ist, ein zweiter Rücken (10446) auf der zweiten Haltewand (1044) gebildet ist, Flansche (2022) durch die zwei längs vorstehenden Ränder des Gleitsitzes (202) gebildet sind, sich Gleitbahnen (2026), die sich längs erstrecken, im Inneren der Flansche (2022) gebildet sind, der Gleitsitz (202) auf der Lagerbasisplatte (1022) der festen Platte (102) der Stativkopfplatte bereitgestellt ist und die zwei Rücken (10242, 10446) der Stativkopfplatte (100) jeweils in entsprechende Gleitbahnen (2026) eingepasst sind.

6. Stativkopfplattenvorrichtung nach Anspruch 5, wobei ein Befestigungsloch (2024) in der Mitte des Gleitsitzes (202) bereitgestellt ist und eine erste Nut (2028) längs an dem hinteren Ende des Gleitsitzes (202) bereitgestellt ist, ein erster Begrenzungsblock (2021) an dem Ende der ersten Nut (2028) gebildet ist, der Kopf des Gleitsitzes (202) gebogen ist, um einen Haken zu bilden, die zwei Begrenzungsstangen (206) jeweils in der Innenseite der Flansche (2022) des Gleitsitzes (202) befestigt sind, eine Stufe längs an dem Boden jeder Begrenzungsstange bereitgestellt ist, wobei eine der Begrenzungsstangen (206) mit einem Schlitz (2064) an dem Boden bereitgestellt ist, ein sich längs erstreckendes Gleitloch (2042) in der Mitte des Schiebers (204) bereitgestellt ist, ein Platten verriegelnder Schlitz (2046), der dem Schlitz einer der Begrenzungsstangen (206) entspricht, mit einer Verriegelungsplatte (207), die imstande ist, horizontal im Inneren einstellend zu gleiten, in dem Kopf des Schiebers (204) gebildet ist, eine zweite Nut (2048), die der ersten Nut (2028) des Gleitsitzes (202) entspricht, an dem Boden des Schiebers (204) bereitgestellt ist, ein zweiter Begrenzungsblock (2041) an dem Ende der zweiten Nut (2048) gebildet ist, Gleitschienen (2044), die den Stufen (2026) der Begrenzungsstangen (206) entsprechen, auf beiden Seiten des Schiebers (204) gebildet sind, der Schieber (204) auf dem Gleitsitz (202) zwischen den zwei Begrenzungsstangen bereitgestellt ist, die zwei Gleitschienen des Schiebers jeweils zwischen den zwei Stufen der Begrenzungsstangen (206) bereitgestellt sind, eine Begrenzungssäule (201), die durch das Gleitloch (2042) des Schiebers (204) verläuft, in dem Befestigungsloch (2024) des Gleitsitzes (202) befestigt ist.

7. Stativkopfplattenvorrichtung nach Anspruch 6, wobei eine Druckfeder (209) zwischen der ersten Nut (2028) und der zweiten Nut (2048) montiert ist.

8. Stativkopfplattenvorrichtung nach Anspruch 7, wobei ein Haltering (208) im Inneren des Hakens (2023) des Gleitsitzes (202) bereitgestellt ist.

9. Stativkopfplattenvorrichtung nach Anspruch 8, wobei eine Kerbe (10444) an dem Boden der zweiten Haltewand (1044) nach unten bereitgestellt ist, wobei die Kerbe (10444) nach unten vorsteht, um eine Verriegelungssäule zu bilden.

## Revendications

1. Dispositif de panneau de tête de trépied, comprenant:
un panneau de tête de trépied (100), et
une plaque à encliquetage (200) montée de façon amovible sur le panneau de tête de trépied (100) ;
le panneau de tête de trépied (100) comprenant une plaque fixe (102), une plaque mobile (104) montée sous la plaque fixe (102) et une plaque d'entraînement (106) montée sous la plaque mobile (104) ;
dans lequel la plaque fixe (102) comprend une plaque de base de palier (1022) et une première paroi de retenue (1024) faisant saillie vers le haut à partir de la plaque de base de palier (1022) ; la plaque mobile (104) comprenant une plaque de base de support (1042) et une deuxième paroi de retenue (1044) faisant saillie vers le haut à partir de la plaque de base de support (1042), avec un trou d'entraînement (10424) prévu au centre de la plaque mobile (104) ; la plaque d'entraînement (106) comprenant une base (1062) montée sous la plaque mobile (104) et une poignée (1066) s'étendant à partir d'une extrémité de la base, avec une came décalée (1064) à l'intérieur du trou d'entraînement (10424) formé dans la base ; la plaque à encliquetage (200) étant montée sur la plaque de base de palier (1022) entre les première et deuxième parois de retenue (1024, 1044) ;
**caractérisé en ce qu'**un trou d'axe (10222) est prévu au centre de la plaque de base de palier (1022) ; une colonne de positionnement (10228) s'étendant vers le bas à partir du centre du bas de la plaque de base de palier (1022) est formée, avec le trou d'axe (10222) traversant la colonne de positionnement (10228) ; une perforation (1067) correspondant au trou d'axe (10222) de la plaque fixe (102) est prévue longitudinalement sur la came excentrique (1064) ; la colonne de positionnement (10228) s'insère dans la perforation (1067), et fait finalement saillie à partir du bas de la plaque d'entraînement (106) par un filetage à l'aide d'un écrou (105) fixé sur le filet de vis de la colonne de positionnement (10228), la plaque mobile (104) et la plaque d'entraînement (106) étant fixes l'une par rapport à l'autre.

2. Dispositif de panneau de tête de trépied selon la revendication 1, dans lequel une ou plusieurs rainures de guidage (10224) sont prévues sur le côté de la plaque de base de palier (1022) opposé à la première paroi de retenue (1024) ; une paire de rainures de coulissement (10226) sont prévues sur le bas de la plaque de base de palier (1022) ; deux côtés de l'extrémité de la plaque mobile (104) opposés à la deuxième paroi de retenue (1044) s'étendent respectivement vers le haut, formant des blocs coulissants (10422) ; un bloc de guidage (10448) s'étendant vers le haut en s'ajustant horizontalement dans les rainures de guidage (10224) de la plaque fixe (102) est formé sur la deuxième paroi de retenue (1044) ; la plaque fixe (102) est prévue sur la plaque de base de support (1042) de la plaque mobile (104) ; les blocs coulissants (10422) de la plaque mobile (104) sont disposés respectivement dans les rainures de coulissement (10226) correspondantes de la plaque fixe (102) ; le bloc de guidage (10448) de la plaque mobile (104) est inséré dans la rainure de guidage (10224) correspondante de la plaque fixe (102) ; la première paroi de retenue (1024) de la plaque fixe (102) et la deuxième paroi de retenue (1044) de la plaque mobile (104) sont parallèles l'une à l'autre, formant un espace d'une certaine largeur entre les deux parois de retenue (1024, 1044), de manière à monter la plaque à encliquetage (200) entre elles ; une paire de tiges filetées (108) passe à travers la première paroi de retenue (1024) et les rainures de guidage (10224) respectivement, et bute contre le bloc de guidage (10448) correspondant ; chacune des tiges filetées (108) est dotée d'un ressort d'extension (101).

3. Dispositif de panneau de tête de trépied selon la revendication 2, dans lequel un trou de passage (1061) est disposé longitudinalement sur la poignée (1066), avec une broche de verrouillage (1063) passant à travers celui-ci ; la broche de verrouillage (1063) étant montée de façon rotative sur la poignée (1066) à l'aide d'une goupille (1065) passant longitudinalement à travers la broche de verrouillage (1063) ; le bas de la poignée (1066) est une pente (1068).

4. Dispositif de panneau de tête de trépied selon la revendication 3, dans lequel la plaque à encliquetage (200) comprend un siège de coulissement (202), une paire de barres de limitation (206) montées sur deux côtés du siège coulissant (202), et un coulisseau (204) capable de coulisser sur le siège de coulissement (202) disposé entre les barres de limitation (206).

5. Dispositif de panneau de tête de trépied selon la revendication 4, dans lequel une première arête (10242) est formée sur la première paroi de retenue (1024) ; une deuxième arête (10446) est formée sur la deuxième paroi de retenue (1044) ; des rebords (2022) sont formés par les deux bords faisant saillie longitudinalement du siège de coulissement (202) ; des glissières (1026) s'étendant longitudinalement sont formées à l'intérieur des rebords (2022) ; le siège de coulissement (202) est disposé sur la plaque de base de palier (1022) de la plaque fixe (102) de la plaque de tête de trépied, et les deux arêtes (10242, 10446) du panneau de tête de trépied (100) sont respectivement ajustées dans des glissières (1026) correspondantes.

6. Dispositif de panneau de tête de trépied selon la revendication 5, dans lequel un trou de fixation (2024) est disposé au centre du siège de coulissement (202), une première rainure (2028) est disposée longitudinalement à l'extrémité arrière du siège de coulissement (202) ; un premier bloc de limitation (2021) est formé à l'extrémité de la première rainure (2028) ; la tête du siège de coulissement (202) est coudée pour former un crochet ; les deux barres de limitation (206) sont fixées dans le côté intérieur des rebords (2022) du siège de coulissement (202) respectivement ; un palier est disposé longitudinalement au bas de chaque barre de limitation, l'une des barres de limitation (206) étant pourvue d'une fente (2064) sur le bas ; un trou de coulissement (2042) s'étendant longitudinalement est disposé au centre du coulisseau (204) ; une fente de verrouillage de plaque (2046), correspondant à la fente de l'une des barres de limitation (206) avec une plaque de verrouillage (207) capable de coulisser horizontalement placée à l'intérieur, est formée dans la tête du coulisseau (204) ; une deuxième rainure (2048) correspondant à la première rainure (2028) du siège de coulissement (202) est disposée sur le bas du coulisseau (204) ; un deuxième bloc de limitation (2041) est formé à l'extrémité de la deuxième rainure (2048) ; des rails de coulissement (2044) correspondant aux paliers (2026) des barres de limitation (206) sont formés sur les deux côtés du coulisseau (204) ; le coulisseau (204) est disposé sur le siège de coulissement (202) entre les deux barres de limitation ; les deux rails de coulissement du coulisseau sont disposés respectivement entre les deux paliers des barres de limitation (206) ; une colonne de limitation (201) passant à travers le trou de coulissement (2014) du coulisseau (204) est fixée dans le trou de fixation (2024) du siège de coulissement (202).

7. Dispositif de panneau de tête de trépied selon la revendication 6, dans lequel un ressort de pression (209) est monté entre la première rainure (2028) et la deuxième rainure (2048).

8. Dispositif de panneau de tête de trépied selon la revendication 7, dans lequel un anneau de retenue (208) est disposé dans le crochet (2023) du siège de coulissement (202).

9. Dispositif de panneau de tête de trépied selon la revendication 8, dans lequel une encoche (10444) est disposée vers le bas sur le bas de la deuxième paroi de retenue (1044), l'encoche (10444) faisant saillie vers le bas pour former une colonne de verrouillage.
